# EUROPÄISCHE PATENTANMELDUNG

(11) **EP 1 785 258 A1**
(43) Veröffentlichungstag der Anmeldung: **16.05.2007**
(21) Anmeldenummer: 06123861.4
(22) Anmeldetag: 10.11.2006
(51) Int. Cl.: B29C 51/12, B29C 69/00

(54) **Verfahren und Vorrichtung zur Herstellung eines doppelwandigen Kunststoffformteils mit wenigstens einem eingelegten Bauteil**

(30) Priorität: 11.11.2005 DE 102005053917
(71) Anmelder: GEISS Aktiengesellschaft, 96145 Sesslach (DE)
(72) Erfinder: Geiss, Manfred, 96145 Sesslach (DE)
(74) Vertreter: Peckmann, Ralf

(57) **Zusammenfassung**

Zur Herstellung eines doppelwandigen Kunststoffformteils mit wenigstens einem eingelegten Bauteil (24) in einem schließbaren Gehäuse einer Thermo- bzw. Vakuumformmaschine wird vorgeschlagen, zunächst ohne Verschweißen das obere Formteil (16) und das untere Formteil (19) herzustellen, dann das obere Formteil (16) im oberen Gehäuseabschnitt (11) soweit anzuheben, dass wenigstens ein Bauteil eingelegt werden kann, und dann anschließend das Gehäuse wieder zu schließen und die Formteile (16, 19) unter Einschluss des wenigstens einen eingelegten Bauteils (24) zu verschweißen.

## Beschreibung

Die Erfindung betrifft ein Verfahren und eine Vorrichtung zur Herstellung eines doppelwandigen Kunststoffformteils aus Abschnitten von Kunststoffmaterialbahnen mit wenigstens einem eingelegten Bauteil in einem schließbaren Gehäuse einer Thermo- bzw. Vakuumformmaschine.

Im Stand der Technik sind bereits Vakuumformmaschinen oder Thermoformmaschinen bekannt, die nach einem sogenannten "Twinsheet-Verfahren" doppelwandige Formteile herstellen. Dabei werden sogenannte "Closed Chamber"-Maschinen eingesetzt, bei denen zwei übereinander eingespannte Kunststoffplatten an dem Maschinengehäuse dicht aufliegen. Hierdurch ist es möglich, einen Durchhang des Materials, der beim Beheizen auftritt, durch Überdruck entsprechend auszugleichen, und es lassen sich Thermoformteile bzw. Twinsheet-Formteile in beliebiger Größe herstellen.

Aus der eigenen älteren deutschen Patentanmeldung Nr. P 42 23 785.8 ist es des Weiteren bekannt, nach dem Verschweißen der beiden Materialzuschnitte diese aus dem luftdicht geschlossenen Twinsheetrahmen auch in einem automatischen Prozess zu entfernen. Dies erfolgt dadurch, dass sich die vier Seitenwände des Twinsheetrahmens jeweils nach außen bewegen und eine größere Öffnung für das Herabfallen des verschweißten Formteils bilden. Nach diesem bekannten Verfahren lassen sich doch nur Kunststoffzuschnitte, nicht jedoch endlose Kunststoffmaterialbahnen verarbeiten.

Zur Verarbeitung endloser Materialbahnen schlägt die ältere deutsche Patentanmeldung Nr. 10 2004 002 431.6 der Anmelderin vor, zur Freigabe des in der Materialbahn verschweißten Formteils einen in Transportrichtung der Materialbahn vorne liegenden Rahmenteil seitlich herausschiebbar zu gestalten.

Die beiden vorgenannten Erfindungen erlauben in günstiger Weise die automatische Herstellung von Twinsheetteilen und ermöglichen vorteilhaft wegen des Vorsehens eines geschlossenen Maschinengehäuses und eines luftdichten Twinsheetrahmens, dass die beiden Materialzuschnitte bzw. die festen Abschnitte der endlosen Materialbahn ständig durch Überdruck gestützt werden können. Mit den beiden vorgenannten Vorrichtungen ist es jedoch nicht möglich, zusätzlich mindestens ein Bauteil bei der Herstellung des doppelwandigen Kunststoffformteils einzubringen.

Der Erfindung liegt demgemäß die Aufgabe zugrunde, ein Verfahren und eine Vorrichtung der eingangs genannten Gattung verfügbar zu machen, nach dem bzw. mit der problemlos, schnell und zuverlässig derartige Kunststoffformteile mit wenigstens einem eingelegten Bauteil hergestellt werden können.

Erfindungsgemäß wird diese Aufgabe durch ein Verfahren mit den Merkmalen des Patentanspruchs 1 gelöst. Bevorzugte weitere Ausgestaltungen des Verfahrens sind in den nachgeordneten Patentansprüche 2 bis 6 angegeben.

Vorrichtungsseitig ist eine Lösung dieser Aufgabe durch die Merkmale des Anspruchs 7 gegeben, wobei bevorzugte Ausgestaltungen der Vorrichtung in den nachgeordneten Ansprüchen 8 bis 11 enthalten sind.

Aufgrund des erfindungsgemäßen Verfahrens und der erfindungsgemäßen Vorrichtung gestaltet sich die Herstellung eines doppelwandigen Kunststoffformteils aus Abschnitten aus Kunststoffmaterialbahnen mit wenigstens einem eingelegten Bauteil außerordentlich schnell und zuverlässig und damit ausschussfrei. Durch die vorgesehene Handhabung der Kunststoffmaterialbahn, und deren haltende und abgedichtete Zuordnung zu den jeweiligen Gehäusehälften ist nicht nur eine hochqualitative Thermo- bzw. Vakuumverformung möglich, sondern es lässt sich auch mit hoher Taktzahl arbeiten, um hohe Produktionsstückzahlen zu erreichen.

Aufgrund der vorgesehenen Einspannmaßnahmen für den oberen Materialbahnabschnitt und den unteren Materialbahnabschnitt mit dem luftdichten Twinsheetrahmen, dem beweglichen Spannrahmen und der Fensterplatte auf dem unteren Gehäuseabschnitt wird eine luftdichte Anordnung geschaffen, wodurch vorteilhaft beide Materialbahnabschnitte während des Beheizens vor dem nachfolgenden Umformen durch geringen Überdruck getragen werden. Zum Umformen der Materialbahnabschnitte werden die in jedem Gehäuseabschnitt vorgesehenen Formwerkzeuge zusammengefahren, wobei jedoch kein Schweißkontakt vorgesehen ist. Anschließend fahren der Spannrahmen, das obere Formwerkzeug, die obere Transporteinrichtung insbesondere in Form einer Nadelkettenleiste, und das obere Formteil bzw. der verformte obere Materialbahnabschnitt mit dem oberen Gehäuseabschnitt zur Entfernung von dem unteren Gehäuseabschnitt nach oben. Hierfür ist eine Hubeinrichtung vorgesehen, die zusammen mit dem oberen verformten Materialbahnabschnitt und dem Spannrahmen auch die sogenannte Transporteinrichtung, speziell in Form der oberen Nadelkettenleisten, soweit von dem unteren Gehäuseabschnitt abhebt, dass problemlos wenigstens ein Bauteil auf einen passenden Abschnitt des unteren verformten Materialbahnabschnitts angeordnet werden kann. Danach erfolgt dann ein Zurückfahren des oberen Gehäuseabschnitts zum vollständigen Schließen und Verschweißen des wenigstens einen eingelegten Bauteils.

Nachfolgend wird die Erfindung unter Bezugnahme auf die beigefügten Zeichnungen näher erläutert. Es zeigen:
- Fig. 1: eine schematische Teildarstellung eines Bereichs innerhalb einer Vakuumformmaschine, in dem jeweils ein Rand einer zu beheizender Materialbahnabschnitte beabstandet gehalten ist;
- Fig. 2: eine Darstellung ähnlich Fig. 1, wobei die erhitzten Materialbahnabschnitte nunmehr durch nicht dargestellte jeweilige Formwerkzeuge im Vakuumformverfahren ohne Verschweißen verformt sind;
- Fig. 3: eine Darstellung ähnlich Fig. 1, wobei jedoch der obere Gehäuseabschnitt von dem unteren Gehäuseabschnitt nach oben angehoben ist, um ein Bauteil einzulegen; und
- Fig. 4: eine Darstellung ähnlich Fig. 1, wobei jedoch der obere Gehäuseabschnitt und der untere Gehäuseabschnitt geschlossen sind und das doppelwandige Kunststoffformteil mit eingelegtem Bauteil durch Verschweißen der beiden verformten Materialbahnabschnitte hergestellt ist.

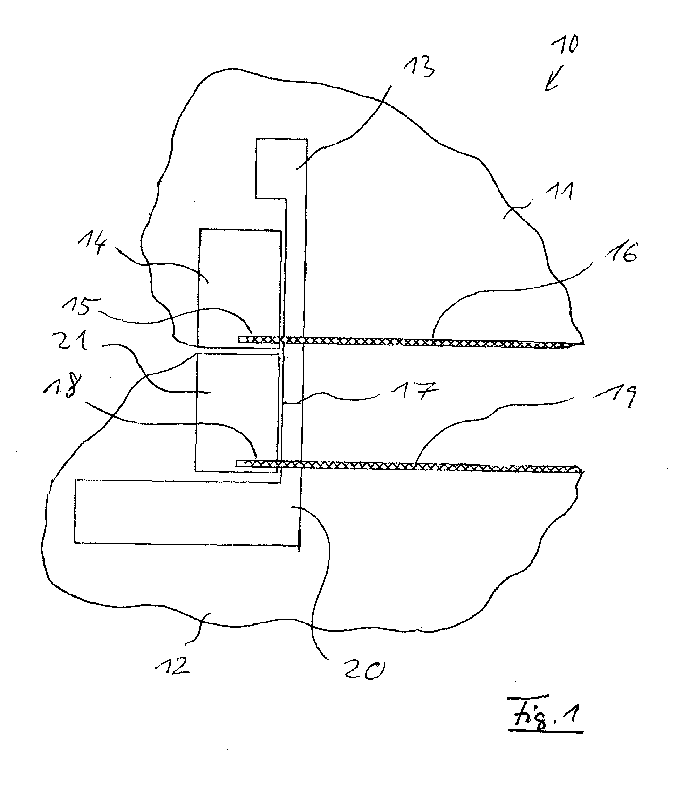

In den Figuren 1 bis 4 sind grob schematisiert ausschnittsweise Teile eines Gehäuses einer Thermo- bzw. Vakuumformmaschine 10 in verschiedenen Herstellungsphasen dargestellt. Von der Vakuumformmaschine 10 sind ausschnittsweise ein oberer Gehäuseabschnitt 11 und ein unterer Gehäuseabschnitt 12 im Bereich eines Seitenrandes des zentralen Bearbeitungsabschnitts der Vakuumformmaschine 10 dargestellt. Zu dem oberen Gehäuseabschnitt 11 gehören ein schematisch angedeuteter Spannrahmen 13 und eine ebenfalls schematisch angedeutete obere Nadelkettenleiste 14, die an einen seitlichen Rand 15 eines oberen Materialbahnabschnitts 16 in nicht dargestellter Weise zum Transport eingreift. Der Spannrahmen 13 beaufschlagt in der geschlossenen Stellung des Gehäuses den Rand 15 des Materialbahnabschnitts und drückt diesen abdichtend auf einen darunter angeordneten luftdichten Twinsheetrahmen 17. Der Twinsheetrahmen 17 beaufschlagt seinerseits an seiner Unterseite abdichtend einen Rand 18 eines unteren Materialbahnabschnittes 19 und drückt diesen abdichtend auf eine schematisch angedeutete Fensterplatte 20, die Bestandteil des unteren Gehäuseabschnitts 12 ist. Zu dem unteren Gehäuseabschnitt 12 gehört weiterhin als Transporteinrichtung für den unteren Materialbahnabschnitt 19 eine untere Nadelkettenleiste 21.

Die Materialbahnabschnitte bestehen aus einem Thermokunststoff und sind in der Stellung gemäß Fig. 1, der sogenannten Heizstellung des mit dem oberen Gehäuseabschnitt 11 und dem unteren Gehäuseabschnitts 12 gebildeten Closed Chamber System seitlich abgedichtet gehalten und werden während des Heizens in nicht dargestellter Weise durch geringen Überdruck getragen.

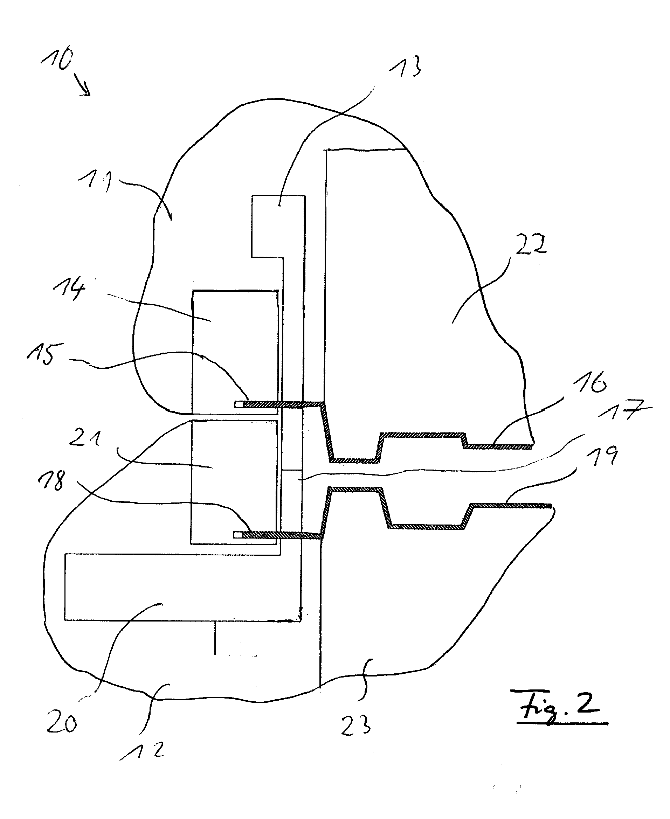

Fig. 2 zeigt eine schematisierte Teildarstellung ähnlich Fig. 1, wobei jedoch nunmehr bereits der obere Materialbahnabschnitt 16 auf einem Formwerkzeug 22 verformt ist und der untere Materialbahnabschnitt 19 auf einem Formwerkzeug 23 durch Vakuumverformung verformt ist. Dabei sind die verformten Materialbahnabschnitte 16 und 19 noch separat und nicht verschweißt. Das Formwerkzeug 22 gehört zu dem oberen Gehäuseabschnitt 11, während das Formwerkzeug 23 zu dem unteren Gehäuseabschnitt 12 gehört. Die Formwerkzeuge 22 und 23 wurden in Fig. 1 zur Vereinfachung weggelassen.

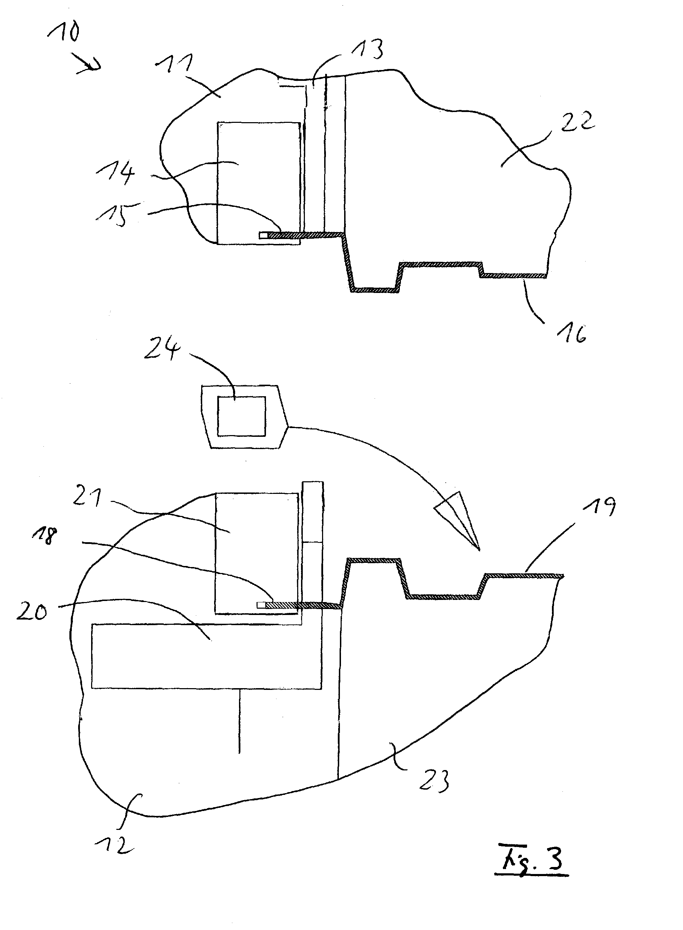

Aus der in Fig. 3 gezeigten Stellung erfolgt dann eine Anhebung des oberen Gehäuseabschnitts 11, wie in Fig. 3 dargestellt, wobei eine nicht dargestellte Hubeinrichtung vorgesehen ist, die elektrisch oder Druckmittel betätigt in eine Taktsteuerung für die Vakuumformmaschine integriert ist.

In der in Fig. 3 dargestellten Stellung sind die beiden Gehäuseabschnitte 11 und 12 soweit voneinander beabstandet, dass ein Bauteil 24 auf dem verformten unteren Materialbahnabschnitt 19 platziert werden kann. Die untere verformte Materialbahn 19 und die obere verformte Materialbahn 16 bleiben unter Vakuum auf dem Formwerkzeug gespannt.

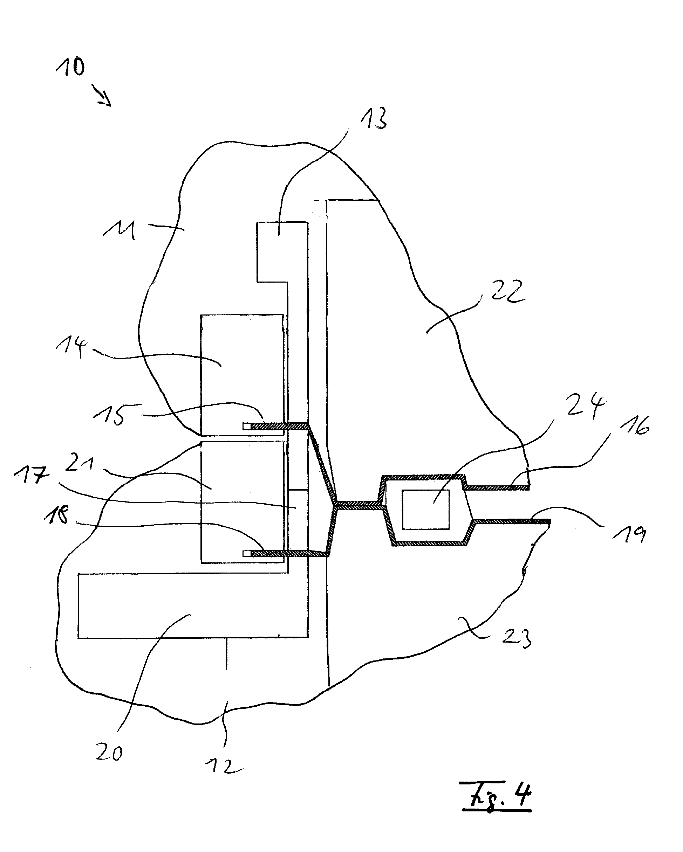

Fig. 4 zeigt den geschlossenen Zustand nach Einbringen des Bauteils 24 und Verschweißen des oberen verformten Materialbahnabschnitts 16 mit dem unteren verformten Materialbahnabschnitt 19 unter Einschluss des eingesetzten Bauteils 24.

## Patentansprüche

1. Verfahren zur Herstellung eines doppelwandigen Kunststoffformteils aus Abschnitten von Kunststoffmaterialbahnen mit wenigstens einem eingelegten Bauteil in einem schließbaren Gehäuse einer Thermo- bzw. Vakuumformmaschine, bestehend aus folgenden Verfahrensschritten:
(a) in das geöffnete Gehäuse werden zwischen einem oberen und einem unteren Gehäuseabschnitt mittels jeweiliger Transporteinrichtungen ein oberer und ein unterer Materialbahnabschnitt eingeführt und über einen Twinsheetrahmen auf Abstand gehalten;
(b) zum Abdichten dieser Anordnung aus Materialabschnitten und Twinsheetrahmen und gleichzeitig zum Halten der beiden Materialbahnabschnitte mit geringem Überdruck während eines der Verformung vorausgehenden Heizens wird durch einen bewegbaren Spannrahmen der obere Materialbahnabschnitt im Bereich oberhalb des Twinsheetrahmens auf diesen gedrückt und damit gleichzeitig der untere Materialbahnabschnitt zur Schaffung einer geschlossenen Kammer gegen den unteren Gehäuseabschnitt der Vakuumformmaschine gedrückt;
(c) die beiden Materialbahnabschnitte werden ohne Schweißkontakt beabstandet mit jeweiligen Formwerkzeugen geformt;
(d) der Spannrahmen, das obere Formwerkzeug, die obere Transporteinrichtung und der verformte obere Materialbahnabschnitt werden mit dem oberen Gehäuseabschnitt vom unteren Gehäuseabschnitt in einem Abstand zum Einlegen des wenigstens einen Bauteils verfahren, wobei die verformten Materialbahnabschnitte jeweils unter Vakuum im den zugeordneten Gehäuseabschnitten gehalten werden;
(e) das wenigstens eine Bauteil wird auf den verformten unteren Materialbahnabschnitt platziert, und
(f) der Spannrahmen, das obere Formwerkzeug, die obere Transporteinrichtung und der verformte obere Materialbahnabschnitt werden zum unteren Gehäuseabschnitt zum Schließen und Verschweißen des Formteils mit dem wenigstens einen eingesetzten Bauteil zurückverfahren.

2. Verfahren nach Anspruch 1, **dadurch gekennzeichnet, dass** der Spannrahmen, das obere Formwerkzeug, die obere Transporteinrichtung und der verformte obere Materialbahnabschnitt gemeinsam unter Beibehaltung eines oberseitigen Unterdrucks auf den verformten oberen Materialbahnabschnitt verfahren werden.

3. Verfahren nach Anspruch 1 oder 2, **dadurch gekennzeichnet, dass** der Spannrahmen, das obere Formwerkzeug, die obere Transporteinrichtung und der verformte obere Materialbahnabschnitt mittels einer Hubeinrichtung verfahren werden.

4. Verfahren nach einem der vorangehenden Ansprüche, **dadurch gekennzeichnet, dass** im Schritt (f) die verformte obere Materialbahn auf den Twinsheetrahmen gedrückt wird, der die verformte untere Materialbahn auf eine Fensterplatte des unteren Gehäuseabschnitts drückt.

5. Verfahren nach Anspruch 4, **dadurch gekennzeichnet, dass** der untere Materialbahnabschnitt gegen eine vorzugsweise verstellbare Fensterplatte gedrückt wird.

6. Verfahren nach einem der vorangehenden Ansprüche, **dadurch gekennzeichnet, dass** die Materialbahnabschnitte mittels Nadelkettenleisten transportiert werden.

7. Vorrichtung zur Herstellung zur Herstellung eines doppelwandigen Kunststoffformteils aus Abschnitten von Kunststoffmaterialbahnen mit wenigstens einem eingelegten Bauteil in einem schließbaren Gehäuse (10) einer Thermo- bzw. Vakuumformmaschine,
**dadurch gekennzeichnet,**
**dass** das Gehäuse (10) einen unteren Gehäuseabschnitt (12) und einen oberen Gehäuseabschnitt (11) aufweist, zwischen die bei nicht geschlossenem Gehäuse ein oberer und ein unterer Materialbahnabschnitt (16 bzw. 17) mittels zugeordneten Transporteinrichtungen (14 bzw. 21) bewegbar sind,
**dass** bei geschlossenem Gehäuse (10) zwischen den Materialbahnabschnitten (16, 19) ein luftdichter Twinsheetrahmen (17) angeordnet ist, wobei der obere Materialbahnabschnitt (16) mittels eines Spannrahmens (13) auf den Twinsheetrahmen (17), der Twinsheetrahmen (17) auf den unteren Materialabschnitt (19), und der untere Materialbahnabschnitt (19) auf eine Fensterplatte (20) des unteren Gehäuseabschnitts (12) zum Abdichten gedrückt ist, und
**dass** der obere Gehäuseabschnitt (11) nach dem Formen der einzelnen Materialbahnabschnitte (16, 19) vor dem Schließen und Verschweißen des Formteils von dem unteren Gehäuseabschnitt (19) in einem Abstand entfernbar ist, der zum Einlegen des wenigstens einen Bauteils (24) ausreicht.

8. Vorrichtung nach Anspruch 7, **dadurch gekennzeichnet, dass** der obere Gehäuseabschnitt (11) zusammen mit dem oberen verformten Materialbahnabschnitt (16), einem zugehörigen Formwerkzeug (22), dem Spannrahmen (13) und der zugeordneten Transporteinrichtung (14) für den oberen Materialbahnabschnitt (16) von dem unteren Gehäuseabschnitt (12) wegbewegbar ist.

9. Vorrichtung nach Anspruch 7 oder 8, **dadurch gekennzeichnet, dass** für das Entfernen des oberen Gehäuseabschnitts (11) vom unteren Gehäuseabschnitt (12) eine Hubeinrichtung vorgesehen ist.

10. Vorrichtung nach einem der Ansprüche 7 bis 9, **dadurch gekennzeichnet, dass** für die verformten oberen und unteren Materialbahnabschnitte (16 bzw. 19) ein Spannen auf dem Formwerkzeug (22) unter Vakuum während des Entfernens der Gehäuseabschnitte (11, 12) voneinander vorgesehen ist.

11. Vorrichtung nach einem der Ansprüche 7 bis 10, **dadurch gekennzeichnet, dass** für ein Heizen der Materialbahnabschnitte (16, 19) diese durch geringen Überdruck im Gehäuse (10) gehalten sind.

12. Vorrichtung nach einem der Ansprüche 7 bis 11, **dadurch gekennzeichnet, dass** als Transporteinrichtungen für die Materialbahnabschnitte Nadelkettenleisten (14, 21) vorgesehen sind.
